# EUROPÄISCHE PATENTANMELDUNG

(11) **EP 1 172 920 A2**
(43) Veröffentlichungstag der Anmeldung: **16.01.2002**
(21) Anmeldenummer: 01115983.7
(22) Anmeldetag: 30.06.2001
(51) Int. Cl.: H02K 7/102, H02K 26/00, H01F 7/14

(54) **Stelleinheit, enthaltend einen Elektromotor mit einem Drehmagneten**

(30) Priorität: 15.07.2000 DE 10034489
(71) Anmelder: FILTERWERK MANN & HUMMEL GMBH, 71631 Ludwigsburg (DE)
(72) Erfinder: Jessberger, Thomas, 71277 Rutesheim (DE)
(74) Vertreter: Voth, Gerhard, Dipl.-Ing.

(57) **Zusammenfassung**

Stelleinheit, bestehend aus zumindest einem Elektromotor mit Drehmagneten und evtl. einem Stellglied, wobei zwischen beweglichen und ortsfesten Teilen der Stelleinheit Arretierungen vorgesehen sind, welche die Endstellungen des Stellgliedes gewährleisten. Die Antriebswelle 11 des Motors 10 ist z. B. mit Radiallöchern 18 versehen, welche mit einer Schnappverbindung 19, 20 am Stator im Eingriff stehen. Durch Wechseln der Position der Antriebswelle 11 zwischen den beiden Radiallöchern ist der Stellbereich des Stellelementes definiert. Die Arretierungen haben den Vorteil, dass eine Beaufschlagung des Drehmagnetmotors mit einem Schaltstrom nur für einen Wechsel der Position zwischen den beiden Arretierungen notwendig ist. Hierdurch wird der Stromverbrauch der Stelleinrichtung vermindert. Gleichzeitig lassen sich durch den Drehmagnetmotor hohe Schaltgeschwindigkeiten erreichen.

## Beschreibung

### Stand der Technik

Die Erfindung betrifft eine Stelleinheit enthaltend zumindest einen Elektromotor mit einem als Rotor ausgeführten Drehmagneten nach der Gattung des Patentanspruches 1 bzw. eine Stelleinheit, die zusätzlich ein Stellglied, insbesondere eine Klappe für ein Kraftfahrzeug, enthält, nach der Gattung des Patentanspruches 2.

Elektromotoren mit Drehmagneten sind z. B. aus der DE 40 26 918 bekannt. Ziel der Verwendung eines solchen Elektromotors ist die Möglichkeit, ohne Zuhilfenahme von Kommutatoren einen Direktantrieb eines Stellgliedes innerhalb eines begrenzten Winkelbereiches zu schaffen. Der elektromotorische Antrieb gemäß dem genannten Dokument ist insbesondere zur Verstellung eines das Kraftstoffluftgemisch eines Verbrennungsmotors beeinflussenden Organs geeignet.

Drehmagneten werden im Kraftfahrzeugbereich für die Schaltung von Klappen verwendet, weil diese eine wesentlich kürzere Schaltzeit im Bereich von ungefähr 25 Millisekunden Erreichen. Mit herkömmlichen Gleichstrommotoren oder Schrittmotoren sind lediglich Schaltzeiten von ungefähr 100 Millisekunden zu erreichen. Im Vergleich zu herkömmlichen Elektromotoren liegt aber die Stromaufnahme von Motoren mit Drehmagnet ungefähr bei dem 6- bis 7- fachen. Damit fallen Ströme von 5 Ampere an. Da ein Elektromotor mit Drehmagnet keine Selbsthemmung aufweist, muss das zu betätigende Stellglied durch eine Feder an einem Anschlag gehalten werden und wird durch Einschalten des Motors in die andere Position gebracht. Um in dieser zu verharren, muss der Motor eingeschaltet bleiben, weswegen eine ständige Antriebsleistung von 60 Watt notwendig wird. Hierdurch steigt in nachteilhafter Weise der Kraftstoffverbrauch des Fahrzeugs.

Aufgabe der Erfindung ist es daher, einen Antrieb für ein Stellglied zu schaffen, welcher bei Gewährleistung kurzer Schaltzeiten betrachtet über die Betriebszeit des Stellgliedes einen geringen durchschnittlichen Energieverbrauch aufweist. Diese Aufgabe wird durch die Merkmale des Patentanspruches 1 gelöst.

### Vorteile der Erfindung

Die erfindungsgemäße Stelleinheit weist einen an sich bekannten Elektromotor mit Drehmagneten als Rotor und einem Stator mit Fremderregung auf. Gekennzeichnet ist die Stelleinheit dadurch, dass der Motor zwischen beweglichen und ortsfesten Teilen mindestens eine Arretierung zur Halterung des Antriebswelle in einer bestimmten Position aufweist. Die Position bestimmt sich durch den Anwendungsfall und ist z. B. aufgrund der konstruktiven Gegebenheiten des anzutreibenden Stellglieds vorgegeben. Die Lösekraft für die Arretierung muss unter der durch den Motor aufbringbaren Stellkraft liegen, damit durch Aktivierung des Motors das Stellglied aus der Arretierung in eine andere Stellung bewegt werden kann. Befindet sich das Stellglied jedoch in der gewünschten Position mit Arretierung, so ist die Beaufschlagung des Motors mit einem Strom nicht notwendig, da das Stellglied in dieser Position fixiert ist. Nur für den Schaltvorgang selbst ist der Strom zur Verstellung des Stellgliedes notwendig.

Vorteilhaft ist die Anbringung von zwei Arretierungen in jeweils einer Endstellung für das Stellglied. Durch Aktivierung des Motors kann das Stellglied dann von einer in die andere Arretierung wechseln. Durch eine entsprechende Ansteuerung des Motors mit unterschiedlichen Strömen können auch weitere Arretierungen zur Erreichung von Zwischenstellungen des Stellgliedes vorgesehen werden. Diese fixieren das Stellglied dann bei Anliegen eines geringen Schnellstroms und können bei Anliegen des vollen Schnellstroms am Motor überwunden werden. Die bereits beschriebene, bekannte Stelleinheit mit der Erzeugung einer Gegenkraft durch eine Feder kann ebenfalls durch eine Arretierung verbessert werden. Die Lösekraft für diese Arretierung muss größer sein, als die Federkraft, welche in der entsprechenden Endstellung auf das Stellglied wirkt. Mit Unterstützung des Motors kann das Stellglied aus der arretierten Endstellung gelöst werden.

Gemäß einer alternativen Ausgestaltung der Erfindung ist in die Stelleinheit sowohl das Stellglied als auch der Elektromotor integriert. Die Arretierung kann dem gemäß sowohl am Stellglied als auch am Motor befestigt sein. Wichtig ist lediglich, dass die Arretierung Wirkpartner zwischen beweglichen und ortsfesten Teilen der Stelleinheit aufweist. Z. B. kann das Stellglied als Klappe ausgeführt sein, und ihren Endstellungen in Arretierungen einrasten, die direkt am Motorgehäuse befestigt sind. Hierdurch ergibt sich eine größere Gestaltungsfreiheit für den entsprechenden Anwendungsfall. Außerdem können herkömmliche Drehmagnetmotoren verwendet werden, wobei die Arretierung vollständig durch bewegliche und ortsfeste Teile des Stellgliedes gewährleistet werden.

Gemäß einer besondere Ausgestaltung der Erfindung weist mindestens eine Arretierung einen Anschlag für das Stellglied auf. Damit ist die Endstellung des Stellgliedes genau definiert. Vorteilhafterweise kann der Anschlag außerdem eine Dichtfläche aufweisen, wenn das Stellglied als Verschlussorgan ausgeführt ist. Die Dichtfläche wirkt direkt mit dem Verschlussorgan zusammen, wodurch dessen Funktionszuverlässigkeit verbessert wird.

Gemäß einer weiteren Ausgestaltung der Erfindung kann die Arretierung durch elastische Elemente gewährleistet sein, welche eine formschlüssige Verbindung erzeugen. Zum Lösen und Schließen der Arretierung wird das elastische Element verformt. Eine andere Möglichkeit ist die Schaffung der Arretierung durch korrespondierende Kontaktflächen, welche eine reibschlüssige Verbindung erzeugen. Hierdurch kann auch eine Dichtung zwischen Stellglied und Arretierung erreicht werden, was dieselbe Wirkung wie die bereits beschriebene Dichtfläche hat.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: einen Schnitt durch einen Motor mit Drehmagneten und Arretierung,
- Figur 2: die Anordnung einer Schaltklappe an einem Motor gem. Figur 1, wobei eine Arretierung für den Klappenflügel am Motorgehäuse untergebracht ist,
- Figur 3: den Schnitt A-A durch die Arretierung, welche als Metallbügel ausgeführt ist und
- Figur 4: ein montagegespritztes Klappenmodul mit Arretierung, wobei der Motor angedeutet ist.

### Beschreibung der Ausführungsbeispiele

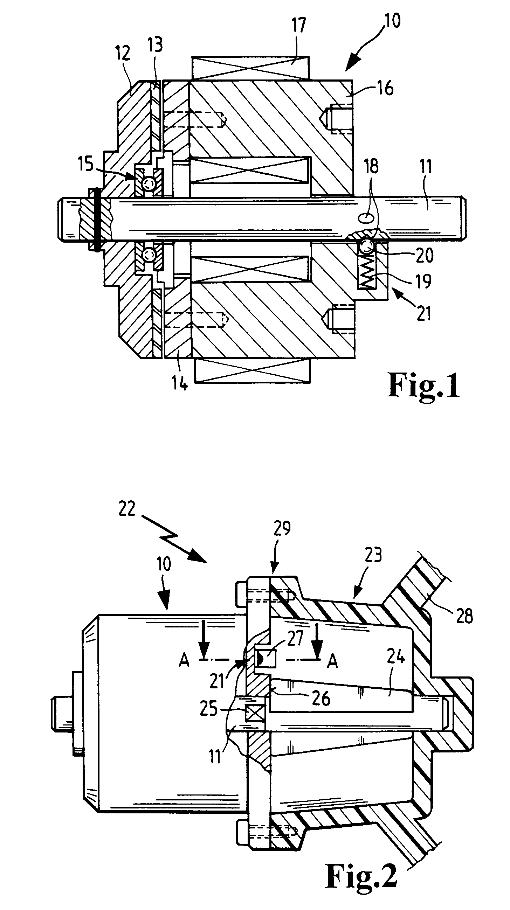

Ein Elektromotor 10 gemäß Figur 1 weist eine Antriebswelle 11 auf, auf der eine Trägerscheibe 12 mit einem Drehmagneten 13 befestigt ist. Die Antriebswelle 11 ist auf einer Zwischenplatte 14 durch ein Kugellager 15 gelagert. Die Zwischenplatte 14 ist mit einem Stator 16 verbunden, welcher eine Fremderregung 17, gebildet durch Spulenkörper, aufweist.

Durch Aktivierung der Fremderregung 17 kann die Antriebswelle um einen definierten Winkel verdreht werden, wobei der Winkel durch Radialbohrungen 18 in der Welle begrenzt wird. In dem Stator 16 ist über eine Feder 19 eine Schnappkugel 20 untergebracht, welche in definierten Endstellungen der Antriebswelle 11 in die Radialbohrungen 18 einrastet. Damit bilden die Schnappkugel 20, die Feder 19 und die Radialbohrungen 18 eine Arretierung 21.

In Figur 2 ist eine Stelleinheit 22, bestehend aus dem Motor 10 und einem Stellglied 23, dargestellt. Das Stellglied weist eine Klappe 24 auf, die über eine Vierkantverbindung 25 mit der Antriebswelle 11 des Elektromotors gekoppelt ist. Die Arretierung 21 wird durch eine Kante 26 der Klappe und einen Bügel 27 aus Federstahl gebildet. Zum Einrasten der Kante 26 in der Arretierung federt der Federbügel zurück, wodurch diese in der Endstellung fixiert wird. Das Stellglied gehört zu einem angedeuteten Saugrohr 28, welches für eine Brennkraftmaschine vorgesehen ist. Motor und Stellglied sind über eine Flanschverbindung 29 miteinander verbunden.

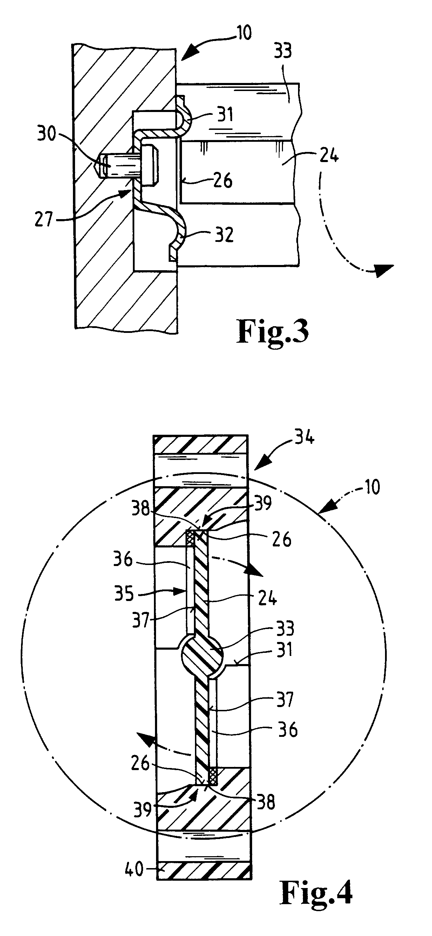

In Figur 3 ist der Bügel 27 gemäß Figur 2 dargestellt. Dieser ist durch eine Nietverbindung 30 am Motor 10 befestigt. Die eine Seite des Bügels bildet einen Anschlag 31. Die andere Seite des Bügels wird durch eine elastische Zunge 32 gebildet, welche federnd nachgibt, wenn die Kante 26 der Klappe 24 den Bügel passiert. Neben der Klappe ist eine Klappenwelle 33 zu erkennen. Die Öffnungsrichtung der Klappe 24 weg vom Anschlag 31 ist durch einen Pfeil angedeutet.

Figur 4 zeigt die Gestaltung eines montagegespritzten Klappenmoduls 34. Dieses ist an einem angedeuteten Elektromotor 10 befestigt. Im Klappenmodul ist eine Dichtung 35, bestehend aus zwei Halbringen 36 angeordnet. Diese weist zur Kante 26 der Klappe hin eine Dichtfläche 37 auf. Die Klappenkante steht weiterhin mit einer Kontaktfläche 38 im Eingriff, welche zusammen mit der Kante 26 eine Arretierung 39 bildet. Diese kommt durch ein Untermaß der Klappenöffnung im Verhältnis zum Durchmesser der Klappe 24 zustande. Es handelt sich hierbei also um eine kraftschlüssige Verbindung, welche durch das Schaltungsmoment des Elektromotors 10 überwunden werden muss. Für die Offenstellung der Klappe 24, welche durch Drehung in Pfeilrichtung erreicht wird, sind in einem Klappenrahmen 40 Anschläge 31 vorgesehen. Eine Arretierung in dieser Position könnte durch die bereits in Figur 3 dargestellten Bügel erfolgen.

## Patentansprüche

1. Stelleinheit, ausgeführt als Elektromotor (10) mit einem als Rotor ausgeführten Drehmagneten (13), insbesondere zur Betätigung eines Stellgliedes in einem Kraftfahrzeug, mit einer Antriebswelle (11) und mit einem Stator (16), der mit einer Fremderregung (17), insbesondere elektrischen Spulen ausgestattet ist, **dadurch gekennzeichnet, dass** der Motor zwischen beweglichen und ortsfesten Teilen mindestens eine lösbare Arretierung (21, 39) zur Halterung der Antriebswelle in einer bestimmten Position aufweist.

2. Stelleinheit (22), enthaltend ein Stellglied (23), insbesondere eine Klappe für ein Kraftfahrzeug, und einen Aktuator, der aus einem Elektromotor mit einem als Rotor ausgeführten Drehmagneten (13), mit einer Antriebswelle (11) und mit einem Stator (16), der mit einer Fremderregung (17), insbesondere elektrischen Spulen ausgestattet ist, besteht, **dadurch gekennzeichnet, dass** die aus Stellglied (22) und Elektromotor bestehende Baugruppe zwischen beweglichen und ortsfesten Teilen mindestens eine lösbare Arretierung (21, 39) zur Halterung der mit dem Stellglied (23) verbundenen Antriebswelle (11) in einer bestimmten Position aufweist.

3. Stelleinheit nach einem der vorherigen Ansprüche, **dadurch gekennzeichnet, dass** zwei Arretierungen (21, 39) vorgesehen sind, die zwei Endstellungen der Antriebswelle (11) definieren.

4. Stelleinheit nach einem der vorherigen Ansprüche, **dadurch gekennzeichnet, dass** mindestens eine Arretierung (21, 39) einen Anschlag (31) für das Stellglied (22) aufweist.

5. Stelleinheit nach Anspruch 4, **dadurch gekennzeichnet, dass** das Stellglied (22) ein Verschlussorgan ist, wobei der Anschlag (31) eine Dichtfläche+20 für die Abdichtung des Verschlussorgans im geschlossenen Zustand aufweist.

6. Stelleinheit, nach einem der vorherigen Ansprüche, **dadurch gekennzeichnet, dass** die Arretierung (21) ein elastisches Element zur Erzeugung einer formschlüssigen Verbindung aufweist.

7. Stelleinheit nach einem der Ansprüche 1 bis 5, **dadurch gekennzeichnet, dass** die Arretierung (39) Kontaktflächen (38) zur Erzeugung einer reibschlüssigen Verbindung aufweist.
